**Europäisches Patentamt**

(19) **European Patent Office**

**Office européen des brevets**

(11) Veröffentlichungsnummer: **0 000 755**
**B1**

(12) **EUROPÄISCHE PATENTSCHRIFT**

(45) Veröffentlichungstag der Patentschrift:
**16.12.81**

(21) Anmeldenummer: **78100545.9**

(22) Anmeldetag: **28.07.78**

(51) Int. Cl.³: **B 29 D  3/02,** B 29 D  3/00,
B 29 C  1/02

(54) **Verfahren zur Herstellung von Formkörpern aus verstärktem Kunststoff und Vorrichtung zur Durchführung des Verfahrens.**

(30) Priorität: **05.08.77  AT 5779/77**
**24.02.78  AT 1370/78**

(43) Veröffentlichungstag der Anmeldung:
**21.02.79 Patentblatt 79/4**

(45) Bekanntmachung des Hinweises auf die Patenterteilung:
**16.12.81 Patentblatt 81/50**

(84) Benannte Vertragsstaaten:
**BE CH DE FR GB LU NL SE**

(56) Entgegenhaltungen:
**CH-A-542 037**
**FR-A-1 518 499**
**FR-A-2 162 020**
**FR-A-2 170 002**
**GB-A-1 108 595**

(73) Patentinhaber: **Schwarz, Walter, Engerthstrasse 237b,**
**A-1020 Wien II. (AT)**

(72) Erfinder: **Schwarz, Walter, Engerthstrasse 237b,**
**A-1020 Wien II. (AT)**

(74) Vertreter: **Tetzner, Volkmar, Dr.-Ing. Dr. Jur.,**
**Van-Gogh-Strasse 3, D-8000 München 71 (DE)**

# Verfahren zur Herstellung von Formkörpern aus verstärktem Kunststoff und Vorrichtung zur Durchführung des Verfahrens

Aus der CH-PS 542 037 wurde ein Verfahren zum Umgießen von Teilen, insbesondere imprägnierten Teilen elektrischer Geräte mit Kunstharz, bekannt. Dabei wird so vorgegangen, daß die zu umgießenden Teile in eine Gießform eingebracht werden. Die Gießform wird dann mit den darin befindlichen Teilen mit Öl gefüllt. In die mit Öl gefüllte Gießform wird dann ein gießbares Kunstharz in flüssigem Zustand eingegossen und das Öl verdrängt. Das Gießharz füllt damit die Form und nimmt deren Innengestalt an. Handelt es sich um einen Quader, so entsteht ein quaderförmiges Endprodukt aus dem erhärteten Gießharz, handelt es sich bei der Gießform um einen isolatorförmigen Körper, so nimmt das Gießharz die Innenform des Isolators an. Die Gießform wird bei dem bekannten Verfahren jeweils von einer vorgefertigten Matrize gebildet, die auch als verlorene Matrize Verwendung finden kann. Bei Anwendung des bekannten Verfahrens muß daher für die Herstellung eines jeden Formkörpers eine geeignete Matrize bereitgestellt werden. Je komplizierter der Formkörper ist, um so komplizierter muß die unbedingt für die Anwendung des Verfahrens benötigte Matrize sein. Weiters muß das Aushärten des Formkörpers in der Matrize abgewartet werden, wodurch die Matrize lange Zeit blockiert ist.

Sollen nach dem bekannten Verfahren Hohlkörper hergestellt werden, so bedarf dies der Verwendung einer Patrize, die der Form des Hohlraumes entspricht. Je komplizierter der Hohlraum geformt wird, um so komplizierter muß auch die Patrize hergestellt sein. Es muß sich dabei fast immer um einen aus mehreren Teilen zusammengesetzten und zerlegbaren Körper handeln.

Durch die FR-PS 1 518 499 wurde ein Verfahren zur Herstellung von Bauplatten bekannt. Es wird dabei zur Erzielung einer strukturierten Plattenoberfläche so vorgegangen, daß auf den Boden einer der Plattengestalt entsprechenden Form ein nicht härtbares Material bis in eine Höhe zwischen 1—10 mm aufgegossen wird. Auf dieses nicht härtbare Material wird dann ein körniges Füllmaterial aufgeschüttet. Die Körner des Füllmaterials dringen hierbei mehr oder weniger stark in das nicht härtende, am Boden der Form befindliche Material ein. Schlußendlich wird auf das Füllmaterial ein Bindemittel aus härtbarem Kunststoff aufgegossen. Dieses Bindemittel durchsetzt das Füllmaterial, nicht jedoch das am Boden der Form befindliche nicht härtende Material. Sobald das Bindemittel ausreichend erhärtet ist, wird der aus dem Füllmaterial und dem nicht härtenden Material bestehende Körper (Platte) aus der Form entfernt und hernach das nicht härtende Material vom Füllmaterial, das mit dem Bindemittel durchsetzt ist, entfernt. Auf diese Weise wird eine strukturierte Plattenoberfläche erreicht.

Nach diesem Verfahren können im wesentlichen nur Platten hergestellt werden, weil nur in einen ebenen Boden aufweisenden Formen eine 1—10 mm gleichmäßige Schicht aus nicht härtendem Material eingebracht werden kann. Die Herstellung beliebig geformter Körper ist nach diesem Verfahren unmöglich.

In der GB-PS 1 108 595 ist ein Verfahren zur Herstellung von Hochspannungsisolatoren beschrieben. Bei diesem Verfahren wird ebenfalls von einer vorgefertigten Matrize Gebrauch gemacht, deren Innenform der Außenform des herzustellenden Isolierkörpers entspricht. Die Gußform besteht hierbei aus zwei Teilen, die durch Bolzen, welche einen von der Trennfuge abstehenden Flansch durchsetzen, zusammengehalten werden. In die Form können auch Teile, z. B. absorbierende Einsätze, eingelegt werden, die dann von Kunststoff umgossen werden. Auch bei diesem Verfahren wird somit von einer vorgefertigten Matrize Gebrauch gemacht, welche allein für die Außenform des herzustellenden Körpers entscheidend ist. Für die Herstellung jedes Körpers muß daher eine gesonderte Matrize vorhanden sein, die — worauf bereits im Zusammenhang mit der Erläuterung der CH-PS 542 037 hingewiesen wurde — über die Aushärtezeit blockiert ist und die je nach Material nur eine begrenzte Anzahl von Abgüssen herzustellen erlaubt. Sollen beim Gießen Unter- oder Überdruck angewendet werden, so müssen die Matrizen diesen Druckbelastungen standhalten und demgemäß dimensioniert sein. Dies erhöht weiters die Kosten.

Körper aus z. B. härtbarem Kunststoff, wie etwa aus Polyester, Epoxydharz od. dgl., die verstärkt sind z. B. mit Fasern oder Gewebestrukturen, wurden bisher entweder nach dem sogenannten Naßverfahren, oder nach dem sogenannten Trockenverfahren hergestellt. Beim Naßverfahren werden die mit dem härtbaren Kunststoff getränkten Fasern auf einen Formkern gebracht, z. B. die Fasern in Strangform (Rovings) vorliegen durch Wickeln, falls die Fasern als Gewebe vorliegen durch Auflegen auf die Formwand und anschließendes Anrollen, wodurch ein Verdichten bzw. ein Entfernen allfälliger Luftblasen erzielt werden soll. Die so erzielbare Verdichtung bzw. Freiheit von Luftblasen ist allerdings beschränkt und unkontrollierbar, so daß eine gleichbleibende Qualität nicht erzielbar ist.

Beim Trockenverfahren werden die Fasern zunächst in die gewünschte Form gebracht, z. B. auf einen Formkern gewickelt, und anschließend erst mit dem Kunststoff getränkt. Zur Erzielung einer besonders guten Verdichtung, bzw. Freiheit von Luftblasen ist es bekannt geworden, einen derartigen, auf einer Patrize (Formkern) sitzenden Faserwickel in eine Matrize (Form) einzusetzen, diese zunächst zu evakuieren, anschließend mit dem Kunststoff zu füllen, diesen — gegebenenfalls sogar unter Druckausübung — in die Form zu pressen und auszuhärten. Dabei werden zwar weitgehend luftblasenfreie und hochverdichtete Formkörper erzielt, doch ist der Formenaufwand beträchtlich: nicht nur muß jede Form vakuum- und druckdicht, sowie mit Zu- und Ableitungen versehen sein, sondern sie ist auch durch die Aushärtungszeit des Kunststoffes beträchtliche Zeit belegt. Es muß daher für eine industrielle Produktion in der Regel eine Vielzahl teurer Formen angeschafft werden.

Die vorliegende Erfindung hat sich daher zum Ziel gesetzt, ein Verfahren und eine Vorrichtung zu schaffen, mit deren Hilfe Formkörper aus z. B. faserverstärkten Kunststoffen verhältnismäßig billig und trotzdem in höchster Qualität reproduzierbar hergestellt werden können. Dies wird ausgehend von einem Verfahren zur Herstellung von Formkörpern aus verstärktem Kunststoff, bei dem ein aus Verstärkungsmaterial gebildeter Körper mit Kunststoff durchtränkt, in einer den Konturen des Körpers zumindest außen entsprechenden Hülle angeliert bzw. aushärten gelassen wird, dadurch erreicht, daß erfindungsgemäß der aus dem Verstärkungsmaterial bestehende Körper vor oder nach seiner Durchtränkung mit dem Kunststoff, zur Bildung der Hülle zumindest außen von dem in flüssigem Zustand befindlichen, mit dem Tränkmaterial nicht mischbaren Hüllmaterial, das die Matrize und/oder Patrize bildet, in Berührung gebracht und umschlossen wird und das Hüllmaterial gegebenenfalls erstarren gelassen wird und nach dem Angelieren bzw. Aushärten des Tränkmaterials wieder entfernt wird.

Durch diese Maßnahme wird die Hülle aus einem praktisch unverbrauchbaren, immer wieder verwendbaren Material gebildet und kann — falls erforderlich — auch in den festen Aggregatzustand übergeführt werden, so daß sie sowohl im flüssigen als auch im festen Aggregatzustand einem etwa zur Anwendung gelangenden Unter- bzw. Überdruck beliebiger Höhe standhält. Die Umhüllungsflüssigkeit legt sich an jeder noch so komplizierten Form eines Verstärkungskörpers an und umhüllt ihn vollständig und fugenlos. Daher entfällt bei Anwendung des erfindungsgemäßen Verfahrens die ansonsten erforderliche Wartung der sehr kostspieligen, toleranzabhängigen, geteilten vorgefertigten Imprägnierformen (Matrizen/Patrizen) traditioneller Art. Die Entformung der fertigen Formkörper kann, falls diese nach dem erfindungsgemäßen Verfahren hergestellt werden, ohne Beschädigung erfolgen, sobald sie formbeständig angeliert sind.

Weiterhin ermöglicht die enge Anschmiegung der vorzugsweise unter Druck stehenden Umhüllungsflüssigkeit an den Formkörper, oder im Falle die Umhüllungsflüssigkeit erstarren gelassen wird, die so gebildete, unter Schrumpfspannung stehende feste Formhülle, einen hohen Anteil an Verstärkungsmaterial für den Formkörper zu verarbeiten, wobei zur Sicherstellung einer vollständigen Durchtränkung dann ein beliebig hoher Unter- oder Überdruck angewendet werden kann. Solcherart lassen sich höchstens Festigkeitswerte erreichen.

Das erfindungsgemäße Verfahren ermöglicht eine industrielle Serienherstellung von Körpern beliebiger Form, Größe und aus beliebigem Verstärkungsmaterial, mit gleichbleibend reproduzierbarer Höchstqualität, wobei gleichzeitig Körper unterschiedlichen Aufbaues hinsichtlich des verwendeten Verstärkungsmaterials und auch unterschiedlicher Größe und Form gleichzeitig erzeugt werden können. Das erfindungsgemäße Verfahren läßt sich in einem geschlossenen System ausführen, welches verhindert, daß das Arbeitspersonal mit gesundheitsschädlichen Dämpfen in Berührung kommt, wodurch gesunde Arbeitsbedingungen geboten werden können.

Nach dem Wesen der Erfindung werden die vorbereiteten Körper aus dem Verstärkungsmaterial mit einer sich selbst bildenden, jeder Form damit eng und druckfest anliegenden, Temperaturbeständigen und dichten Umhüllungsflüssigkeit überzogen, die in flüssigen Aggregatzustand belassen, jedoch auch in den festen Aggregatzustand übergeführt werden kann. Da der Formkörper in flüssiges Material gehüllt wird, entstehen keine Trennfugen. Die Formhülle wird nach dem Gelieren bzw. Aushärten des Tränkmaterials abgezogen, soferne sie erstarren gelassen wurde, kann das Entfernen z. B. durch Schmelzen, Auflösen, Aufschneiden oder Zertrümmern durch Ultraschall erfolgen. Dabei kann das Material der Formhülle immer wieder verwendet werden.

Obwohl als Umhüllungsflüssigkeit verschiedene anorganische und organische Flüssigkeiten herangezogen werden können, soferne sie mit dem Tränkmaterial nicht reagieren bzw. sich mit ihm nicht mischen, erweisen sich niedrigschmelzende Legierungen als besonders zweckmäßig. Nicht nur ergibt sich durch deren hohe Dichte ein besonders gutes Angelieren an dem Körper aus dem Verstärkungsmaterial und ein Eindringen auch in verhältnismäßig unzugängliche Hinterschneidungen u. dgl., die mit den Mitteln des herkömmlichen Formenbaues besonders schwierig herzustellen wären, sondern eine solche Legierung kann durch geringes Senken der Temperatur bereits in den festen Aggregatzustand übergeführt werden, wodurch eine starre hochdruckfeste einstückige und damit von Trennfugen freie Hülle für die Formkörper entsteht. Dabei kann ein hoher Verdichtungsgrad erreicht werden. Der Schmelzpunkt des Materials für die Umhüllung liegt unterhalb der Temperaturfestigkeit des ausgehärteten Kunststoffes (Tränkmaterials). Als Legierungen können eutektische Mischungen von Wismut, Blei, Zinn, Kadmium und Antimon eingesetzt werden; sie können sehr genau auf einen bestimmten gewünschten Schmelzpunkt eingestellt werden. So gibt es unter den Wimut-Zinn-Blei-Kadmium-Indium-Legierungen solche, deren Schmelzpunkt bei 47° C liegt. Spezielle Wismut-Blei-Kadmiumlegierungen z. B. haben einen Schmelzpunkt von 92° C, Wismut-Zinn-Zink-Legierungen einen solchen von 130° C. Von Zinn-Blei-Kadmium-Legierungen liegt der Schmelzpunkt bei 145° C; ein Schmelzpunkt von 221° C kann mit Zinn-Silber-Legierungen erreicht werden, mit Kadmium-Antimon-Legierungen ein solcher von 292° C.

Um die Lage der Körper aus dem Verstärkungsmaterial beispielsweise beim Umgießen mit dem Umhüllungsmaterial oder beim Eintauchen in die Umhüllungsflüssigkeit zu sichern, können Abstandhalter, Einlagen, Stützgerüste od. dgl. aus starken Materialien verwendet werden, die gegen die Umhüllungsflüssigkeit resistent und der betreffenden Temperaturbeanspruchung gewachsen sind.

Als Verstärkungsmaterial können in an sich bekannter Weise Faserstränge, Stapelfasern, Gewebe, Drähte, Flocken, Whiskers u. dgl. aus Kunststoff, Glas, Textil, Kohlenstoff, Asbest oder Metall (z. B. Stahl, Beryllium etc.) verwendet werden. Dieses Material wird in einer der jeweiligen Formen angepaßten Weise auf einen gleichfalls an sich bekannten Grundkörper aufgetragen, z. B. durch Wickeln, Spritzen, elektrostatische Fixierung od. dgl.

Der Grundkörper kann als Patrize während der Durchführung des erfindungsgemäßen Verfahrens im fertigen Formkörper verbleiben, d. h. eine Art verlorene Schalung bilden und aus — gegebenenfalls verstärktem — Kunststoff, aus einem geeigneten Liner od. dgl. bestehen.

Der Grundkörper kann aus dem Formkörper auch vor oder nach dessen Durchtränkung entfernt werden. Ist ein Faserwickel so ausgebildet, daß er auch ohne den tragenden Grundkörper für die Handhabung während der Durchtränkung bzw. der Umhüllung eine ausreichende Festigkeit aufweist, kann er unmittelbar nach dem Wickeln vom Grundkörper abgezogen werden. Selbst bei komplizierten Grundkörpern kann dabei gegebenenfalls mit nur einem Grundkörper das Auslangen gefunden werden.

Ist hingegen die Festigkeit des Faserwickels allein zu gering, dann wird die Durchtränkung bzw. Umhüllung bei auf dem Grundkörper befindlichen Formkörper erfolgen, der — wenn er im fertigen Formkörper nicht erwünscht ist — erst nach Durchführung des erfindungsgemäßen Verfahrens entfernt wird. In diesem Fall wird der Grundkörper z. B. aus dünnwandigem Gips oder Glas, aus einem Material wie z. B. einer tiefschmelzenden Metallegierung, Wachs od. dgl., aus verdampfbarem Schaumstoff, oder eventuell aus dem gleichen Material wie die Umhüllungsflüssigkeit gebildet, die im Laufe des Verfahrens erstarren gelassen wird. Besonders die letzte Methode hat sich als vorteilhaft erwiesen, weil der Grundkörper dabei in die Außenform (gebildet von der erstarrten Umhüllungsflüssigkeit) integriert wird und alle Probleme vermieden werden, die unterschiedliche Ausdehnungskoeffizienten bei verschiedenen Materialien an Formhülle und Grundkörper verursachen.

Nach einer Ausführungsform der Erfindung wird der Körper aus Verstärkungsmaterial mit dem Hüllmaterial in flüssigem Zustand umhüllt, worauf gegebenenfalls nach dessen Erstarren, durch ausgesparte Zu- und Ablauföffnungen die Durchtränkung mit dem Tränkmaterial erfolgt. Wenn der Körper aus dem Verstärkungsmaterial grobporig ist, ist es zweckmäßig, ihn bevor die Umhüllung mit der Umhüllungsflüssigkeit erfolgt, an der Oberfläche unter Aussparung von Zu- und Ablauföffnungen, z. B. durch Pulverbeschichtung, mit einem porenverschließenden Überzug zu versehen. Solcherart wird ein Eindringen der Umhüllungsflüssigkeit in den Körper aus Verstärkungsmaterial sicher verhindert.

Nach einer anderen Ausführungsform der Erfindung wird der Körper aus Verstärkungsmaterial — gegebenenfalls auf dem Grundkörper — nach einer bevorzugt vorgenommenen Entgasung in ein Bad aus dem Tränkmaterial eingetaucht und durchtränkt; anschließend wird das überschüssige Tränkmaterial von der Umhüllungsflüssigkeit verdrängt, der durchtränkte Formkörper angeliert bzw. ausgehärtet und danach die Umhüllungsflüssigkeit wieder entfernt. Vorzugsweise werden die Körper aus Verstärkungsmaterial vor dem Eintauchen in das Bad unter Vakuum gesetzt und/oder nach dem Eintauchen in das Bad — z. B. während einiger Minuten — unter höherem Druck (z. B. 10 bar und darüber) gesetzt, wenn der verwendete Behälter als Autoklav ausgebildet ist. Für vergleichsweise viel geringere Drücke mußten bisher schon sehr aufwendige Formenkonstruktionen gewählt werden.

Das erfindungsgemäße Verfahren kann bevorzugt in einer Vorrichtung ausgeübt werden, bei der erfindungsgemäß in einem — gegebenenfalls unter Vakuum und/oder Druck setzbaren — Behälter je eine Zu- und Abführleitung für das Tränkmaterial sowie je eine Zu- und Abführleitung für die Umhüllungsflüssigkeit angeordnet ist und bei der im Inneren des Behälters ein Gitter od. dgl. zum Verhindern des Aufschwimmens der Formkörper angeordnet ist. Bei einer solchen Vorrichtung wird die Umhüllungsflüssigkeit an Hand der Verfahrensdauer in flüssigem Aggregatzustand gehalten. Die Vorrichtung kann selbst für einen vollautomatischen Ablauf des Verfahrens einfach gestaltet werden und ist lediglich für einen Austausch der Flüssigkeiten (Tränkmaterial und Umhüllungsflüssigkeit) einzurichten.

Besonders zweckmäßig kann das erfindungsgemäße Verfahren in einer Vorrichtung ausgeführt werden, bei der ein Entfernen der Umhüllungsflüssigkeit aus dem Behälter vermieden wird. Eine solche Vorrichtung zeichnet sich erfindungsgemäß dadurch aus, daß ein unter Vakuum und/oder Druck setzbarer Behälter als ein um seine Längsachse wenigstens um 180° schwenkbares Gefäß ausgebildet ist, in dem die Umhüllungsflüssigkeit verbleibt und wobei der Behälter je eine Zu- und Abführleitung für das Tränkmaterial aufweist.

Das erfindungsgemäße Verfahren wird nachstehend an Hand der Zeichnung näher erläutert, die Ausführungsbeispiele erfindungsgemäßer Vorrichtungen zur Durchführung des Verfahrens veranschaulicht. Es zeigt die

Fig. 1 einen schematischen Vertikalschnitt mit erstarrtem Umhüllungsmaterial in einem Formraum,

Fig. 2 einen schematischen Vertikalschnitt durch einen verschließbaren Behälter mit Aufnahmeplatten für beliebig viele Körper aus Verstärkungsmaterial, wobei in den Aufnahmeplatten Zuführungsöffnungen für ein Unter- bzw. Überdruckmedium sowie die Zu- und Abfuhr des Tränkungsmaterials angeordnet sind,

Fig. 3 eine Aufnahmeplatte im Teilschnitt mit zwei eingezeichneten Körpern aus Verstärkungsmaterial (90° Rohrkrümmern) in Vorderansicht ungeschnitten,

Fig. 4 einen schematischen Vertikalschnitt durch einen temperaturgeregelten verschließbaren Behälter (Autoklaven) mit nach dem erfindungsgemäßen Verfahren zu behandelnden Körpern aus Verstärkungsmaterial, wobei die Körper von Umhüllungsmaterial umschlossen sind, das in flüssigem Aggregatzustand vorliegt, und die

Fig. 5 und 6 eine erfindungsgemäße Vorrichtung in Trommelform im Längsschnitt in Ausgangslage bzw. um 180° demgegenüber verdreht.

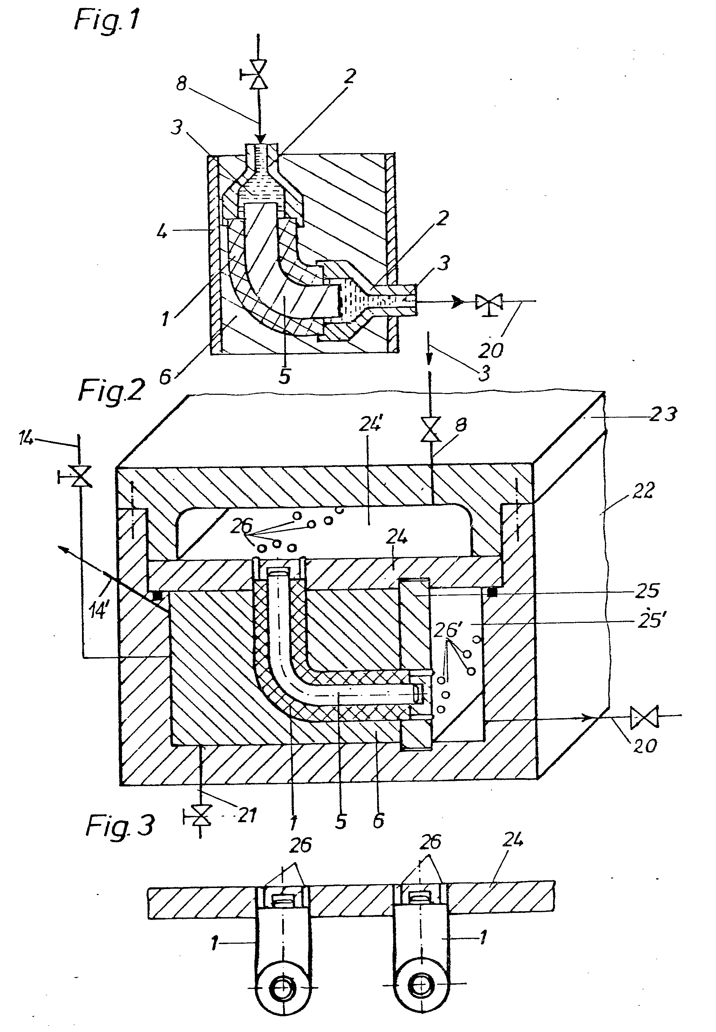

Fig. 1 zeigt einen als Fitting ausgebildeten Körper 1 aus Verstärkungsmaterial, der mit stirnseitig aufgesetzten Anschlußstücken 2 (Trichter) für die Zu- bzw. Ableitung des Tränkmaterials 2 (Imprägnierharz) versehen ist. Der Körper 1 befindet sich im Inneren eines festen Gießmantels 4. Der Körper 1 weist in seinem Inneren noch einen Grundkörper 5 (Kern) auf. In den Gießmantel 4 wird das Umhüllungsmaterial eingegossen, das nach dem Erstarren die Formhülle 6 für den Körper 1 bildet. Der Grundkörper 5 kann dabei aus festem, verflüssigbaren oder vergasbaren Material bestehen.

Unter Verwendung einer in den Fig. 2 und 3 dargestellten Vorrichtung können Formkörper aus verstärktem Kunststoff wie folgt hergestellt werden:

Das Vorgehen wird hierbei für die Herstellung von Winkelstücken (Rohrbögen) beispielsweise erläutert. Die aus dem Verstärkungsmaterial bestehenden Körper (Winkelstücke) 1 werden zunächst gemeinsam mit dem Grundkörper 5 (Kern) in zwei plattenförmige Anschlußstücke 24 und 25 eingesetzt. Die Anschlußstücke 24 und 25 besitzen Zu- und Abführöffnungen 26 und 26', die durch die Platten 24, 25 hindurchführen und in den beiden Stirnflächen der aus Verstärkungsmaterial bestehenden Körper 1 münden.

In Fig. 3 ist das Anschlußstück 24 mit zwei dort eingesetzten Körpern 1 aus Verstärkungsmaterial dargestellt. In ein Anschlußstück 24 können jedoch auch beliebig viele Körper aus Verstärkungsmaterial eingesetzt werden.

Sobald die Körper 1 aus dem Verstärkungsmaterial in die Anschlußstücke 24 und 25 eingesetzt sind, werden diese in einen Behälter 22 eingesetzt, der sodann mit einem Deckel 23 verschlossen wird. Dem Behälter 22 wird sodann über eine mit einem Ventil versehene Zufuhrleitung 14 das Umhüllungsmaterial zur Bildung der Formhülle 6 zugeführt. Die Luft entweicht hierbei über eine Entlüftungsleitung 14'. Sodann wird das Tränkmaterial 3 über eine mit Ventil versehene Zufuhrleitung 8 durch den Deckel 23 hindurch einem Raum 24' oder dem Anschlußstück 24 zugeführt und gelangt über die Zufuhröffnungen 26 in dem Anschlußstück 24 zur oberen Stirnfläche der Körper 1 aus Verstärkungsmaterial, durchsetzt diese und tritt über die Öffnungen 26' in dem Anschluß 25 wieder aus, gelangt in einen Raum 25', von wo es über eine mit Ventil 20 versehene Abfuhrleitung abgezogen werden kann. Sobald das Tränkungsmaterial angeliert bzw. ausgehärtet ist, kann — soferne das Umhüllungsmaterial 6 in flüssigem Zustand gehalten wurde — dieses Material über eine mit Ventil versehene Abfuhrleitung 21 abgezogen werden. Wurde das Umhüllungsmaterial jedoch in den festen Aggregatzustand übergeführt, so wird die solcherart starre Formhülle 6 mitsamt den Anschlußstücken 24 und 25 und den eingegossenen, bereits durchtränkten Körpern 1 aus Verstärkungsmaterial aus dem Behälter 22 entnommen und die Formhülle 6 abgeschmolzen oder auf sonst eine andere Weise entfernt (etwa durch Zerschlagen, wenn es sich um glasartiges Material handelt), womit dann die aus verstärktem Kunststoff bestehenden Körper 1 frei sind. Der Grundkörper 5 kann hierbei ebenfalls ausgeschmolzen oder durch Vergasen je nach dem Material, aus dem er besteht, aus dem Inneren des Körpers 1 entfernt werden.

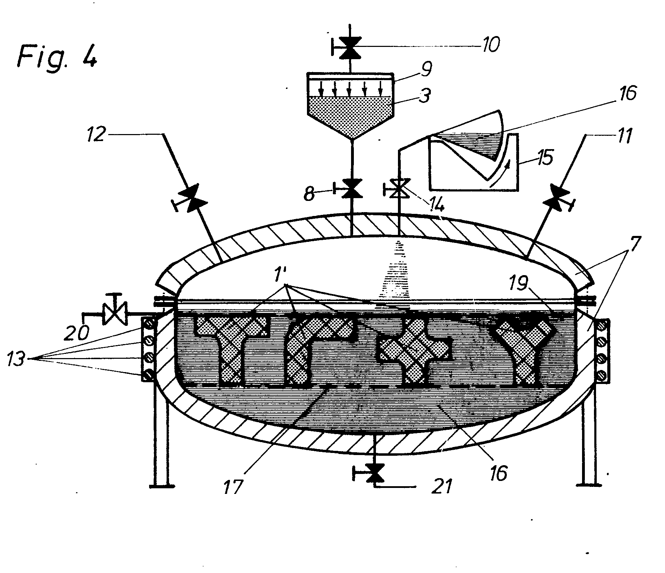

In einer Vorrichtung gemäß Fig. 4 kann das erfindungsgemäße Verfahren wie folgt ausgeführt werden: Die Körper 1' aus Verstärkungsmaterial werden in einem vakuum- und druckdichten Behälter 7 auf einem Gitter 17 (Rost) abgelegt und mit einem weiteren Gitter 19 abgedeckt. Nach dem Verschließen des Behälters 7 wird eine Unterdruckleitung 12 zur Entgasung des Behälterinhaltes, insbesondere der Körper 1' aus Verstärkungsmaterial, geöffnet. Nach Erreichen des gewünschten Unterdruckes wird die Unterdruckleitung 12 geschlossen und das Ventil in der Zufuhrleitung 8 für Tränkmaterial 3 geöffnet. Zuvor wurde das in einem Vorratsbehälter 9 befindliche Tränkmaterial 3 durch Anlegen von Unterdruck an eine in den Vorratsbehälter 3 mündende Leitung 10 entgast. Damit ergießt sich das Tränkmaterial 3 blasenfrei in den Behälter 7 und über die Verstärkungskörper 1' und wird bis zur Höhe des Gitters 19 bzw. der Einmündung der Abfuhrleitung 20 in den Behälter 7 einströmen gelassen. Nach dem Schließen des in der Zufuhrleitung 8 für Tränkmaterial befindlichen Ventiles wird eine Druckleitung 11 geöffnet, und das im Behälter 7 in flüssigem Zustand befindliche Tränkmaterial unter Druck gesetzt, wodurch eine gleichmäßige Durchtränkung der Körper 1' aus dem Verstärkungsmaterial erzielt wird. Nachdem der Druck im Behälter etwa 3—5 min aufrechterhalten wurde, wird das Ventil in der Druckleitung 11 wieder geschlossen und der Behälter 7 entlüftet. Es wird jetzt das Ventil 14 in der Zufuhrleitung für die Umhüllungsflüssigkeit 16 geöffnet und die Umhüllungsflüssigkeit (flüssiges Metall) aus einem Gefäß 15 in den Behälter 7 strömen gelassen, wobei die Umhüllungsflüssigkeit 16 das im Behälter 7 befindliche Tränkmaterial, soweit es sich nicht in dem Körper 1' aus Verstärkungsmaterial befindet, über die Abfuhrleitung 20 nach außen verdrängt. Das Gitter 19 hindert die mit dem Tränkmaterial durchtränkten Körper 1' am Aufschwimmen in der Umhüllungsflüssigkeit. Die Umhüllungsflüssigkeit 16 wird ebenfalls bis zur Höhe des Gitters 19 steigen gelassen. Nach Schließen des Ventiles in der Zufuhrleitung 14 für das Umhüllungsmaterial 16 und des Ventiles in der Abfuhrleitung 20 für Tränkmaterial beginnt die Aushärtung des in den Körpern 1' verbliebenen Tränkmaterials unter dem Einfluß der in dem Umhüllungsmaterial gespeicherten Wärme, sowie gegebenenfalls durch die von einer Mantelheizung 13 des Behälters 7 erzeugte Wärme. Nach erfolgter Aushärtung des Tränkmaterials in den Körpern 1' wird das flüssige Umhüllungsmaterial 16 durch eine mit einem Ventil versehene Abfuhrleitung 21 aus dem Behälter 7 wieder ablaufen gelassen. Der Behälter 7 wird sodann geöffnet, und die nunmehr fertigen Körper 1' werden entnommen.

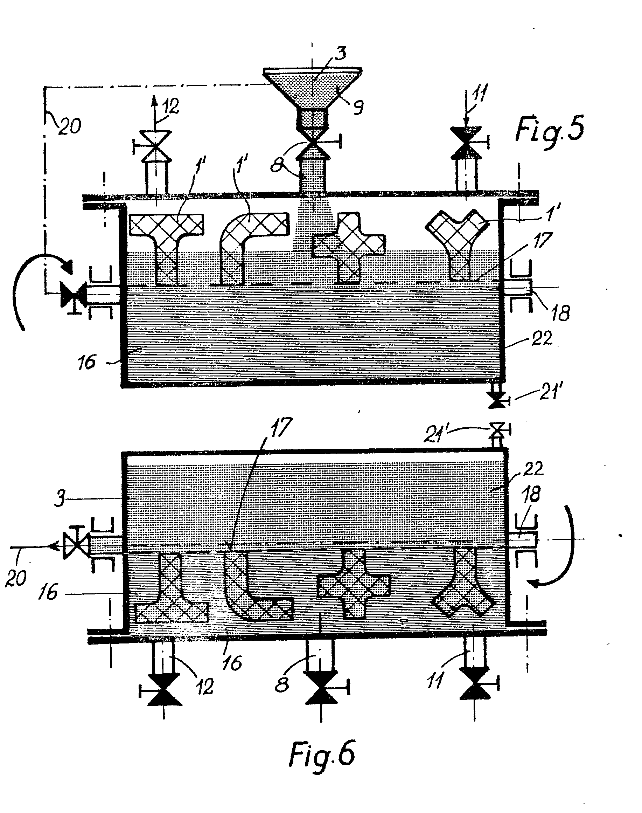

In der Ausführungsform gemäß den Fig. 5 und 6 ist der Behälter 22 als um eine Achse 18 zumindest um 180° schwenkbare Trommel ausgebildet. In der Trommel befindet sich ein Gitter 17, das sich in Richtung der Schwenkachse 18 erstreckt. Auf dem Gitter 17 werden die zu durchtränkenden Körper 1' aus Verstärkungsmaterial abgelegt bzw. erforderlichenfalls durch Stützen oder auf Dornen gehalten. Unter dem Gitter 17 befindet sich die Umhüllungsflüssigkeit 16 in Form einer niedrigschmelzenden Legierung. In den Mantel der Trommel münden an Stellen, die frei von der Umhüllungsflüssigkeit 16 sind, die Unterdruckleitung 12, die Überdruckleitung 11 und die durch ein Ventil absperrbare Zufuhrleitung 8, die zu dem Vorratsbehälter 9 für das Tränkmaterial 3 führt. Aus der Trommel führt durch die hohl ausgebildete Achse 18 weiter die Abfuhrleitung 20 für das Tränkmaterial 3, die verschließbar ist und über welche nach dem Wenden der Trommel aus der in Fig. 5 gezeigten Lage in die Lage gemäß Fig. 6 das Tränkmaterial abgezogen und dem Vorratsbehälter 9 wieder zugeführt werden kann. Das erfindungsgemäße Verfahren kann wie folgt unter Verwendung einer Vorrichtung, wie sie in Fig. 5 dargestellt ist, ausgeführt werden:

Der Behälter 22 wird vor der Beschickung in einer Lage gebracht, in der sich die Umhüllungsflüssigkeit 16 unterhalb des Gitters 17 befindet (Fig. 5). Dann werden die Körper 1' über eine Öffnung in der Trommel in den Innenraum eingebracht und auf das Gitter 17 abgelegt. Nach dem Verschließen des Behälters 22 wird durch Öffnen der Unterdruckleitung 12 die Luft aus dem Innenraum des Behälters 22 und aus den Körpern 1' aus Verstärkungsmaterial entfernt. Nach dieser Entgasung wird die Unterdruckleitung 12 geschlossen und aus dem Vorratsbehälter 9 über das geöffnete Ventil in der Zufuhrleitung 8 Tränkmaterial 3 in den Behälter 22 eingeführt, bis die Körper 1' bedeckt sind, d. h. bis das Niveau des zugeführten Tränkmaterials höher liegt als der höchste Punkt aller auf dem Gitter 17 abgelegten Körper 1'. Nachdem dieser Zustand erreicht ist, wird das Ventil in der Zufuhrleitung 8 geschlossen und über die Druckleitung 11 der Innenraum des Behälters 22 unter Überdruck gesetzt. Dadurch werden die Körper 1' aus Verstärkungsmaterial besonders intensiv von dem Tränkmaterial durchtränkt. Die Überdruckleitung 11 kann dann geschlossen werden, worauf der Behälter 22 aus der in Fig. 5 gezeigten Lage um 180° gewendet wird. Hierbei steigen die Körper 1' sofort bis zur Anlage am Gitter 17 auf (Fig. 6) und das Tränkmaterial wird schlagartig durch die in dem Behälter 22 befindliche Umhüllungsflüssigkeit 16, von gegenüber dem Tränkmaterial erhöhter Dichte, verdrängt. Das Tränkmaterial wird hierbei über die Abfuhrleitung 20 abgeführt und — wie bereits erwähnt — in den Vorratsbehälter 9 rückgeführt. Die mit dem Tränkmaterial durchsetzten Körper 1' sind zur Gänze von der Umhüllungsflüssigkeit 16 hoher Dichte umgeben und das Tränkmaterial in den Körpern 1' kann gelieren bzw. aushärten, gegebenenfalls unter Wärmezufuhr, nämlich unter Zufuhr ultravioletter Strahlung, oder auch unter Anwendung von Mikrowellenenergie u. dgl. Nachdem das Tränkmaterial gehärtet ist bzw. ein Gelstadium erreicht hat, wird der Behälter 22 wieder in die in Fig. 5 dargestellte Lage gewendet. Die Umhüllungsflüssigkeit 16 von gegenüber dem Tränkmaterial erhöhter Dichte befindet sich wieder unterhalb des Gitters 17 und die nunmehr völlig freien Körper 1' können vom Gitter entfernt und aus dem Behälter 22 herausgenommen werden.

Aus dem Behälter 22 gemäß den Fig. 5 und 6 ist ein zwei Funktionen ausübendes Ventil 21' angeordnet. In der Lage gemäß Fig. 6 dient es zur Belüftung des Behälterinnenraumes während der Entleerung; in der Lage nach Fig. 5 jedoch zur Abführung der Umhüllungsflüssigkeit 16.

**Patentansprüche**

1. Verfahren zur Herstellung von Formkörpern aus verstärktem Kunststoff, bei dem ein aus Verstärkungsmaterial gebildeter Körper mit Kunststoff durchtränkt, in einer den Konturen des Körpers zumindest außen entsprechenden Hülle angelieren bzw. aushärten gelassen wird, dadurch gekennzeichnet, daß der aus dem Verstärkungsmaterial bestehende Körper vor oder nach seiner Durchtränkung mit dem Kunststoff zur Bildung der Hülle, zumindest außen von dem in flüssigem Zustand befindlichen, mit dem Tränkmaterial nicht mischbaren Hüllmaterial, das die Matrize und/oder Patrize bildet, in Berührung gebracht und umschlossen wird und das Hüllmaterial gegebenenfalls erstarren gelassen wird und nach dem Angelieren bzw. Aushärten des Tränkmaterials wieder entfernt wird.

2. Verfahren nach Anspruch 1, dadurch gekennzeichnet, daß der Körper aus dem Verstärkungsmaterial fugenlos umhüllt wird.

3. Verfahren nach Anspruch 1 oder 2, dadurch gekennzeichnet, daß der Körper aus dem Verstärkungsmaterial von einer niedrigschmelzenden Legierung, insbesondere eutektischen Metallegierung umhüllt wird.

4. Verfahren nach einem der Ansprüche 1 bis 3, bei dem der Körper aus dem Verstärkungsmaterial auf einem Grundkörper, z. B. einem Vorformkern, einem Wickeldorn oder einem verlorener Kern geformt wird, dadurch gekennzeichnet, daß der Körper vor der Durchtränkung bzw. Umhüllung von dem Grundkörper getrennt wird.

5. Verfahren nach einem der Ansprüche 1 bis 3, bei dem der Körper aus Verstärkungsmaterial auf einem Grundkörper, z. B. einem Vorformkern, einem Wickeldorn oder einem verlorenen Kern geformt wird, dadurch gekennzeichnet, daß der aus dem Grundkörper und dem Verstärkungsmaterial bestehende Verbund mit der Tränkflüssigkeit umgossen und dabei der aus dem Verstärkungsmaterial bestehende Körper getränkt wird.

6. Verfahren nach Anspruch 5, dadurch gekennzeichnet, daß als Grundkörper ein solcher eingesetzt wird, der aus dem gleichen Material besteht wie das Hüllmaterial.

7. Verfahren nach einem der Ansprüche 1 bis 6, dadurch gekennzeichnet, daß die Durchtränkung unter Unter- und/oder Überdruckbedingungen erfolgt.

8. Verfahren nach einem der Ansprüche 1 bis 7, dadurch gekennzeichnet, daß der Körper aus Verstärkungsmaterial mit dem Hüllmaterial in flüssigem Zustand umhüllt wird, worauf — gegebenenfalls nach dessen Erstarren — durch ausgesparte Zu- und Ablauföffnungen die Durchtränkung mit dem Tränkmaterial erfolgt.

9. Verfahren nach Anspruch 8, dadurch gekennzeichnet, daß der Körper aus Verstärkungsmaterial an seiner Oberfläche unter Aussparung von Zu- und Ablauföffnungen noch vor der Umhüllung mit dem flüssigen Hüllmaterial mit einem porenverschließenden Überzug versehen wird.

10. Verfahren nach einem der Ansprüche 1 bis 7, dadurch gekennzeichnet, daß der Körper aus Verstärkungsmaterial — gegebenenfalls auf dem Grundkörper — nach einer bevorzugt vorgenommenen Entgasung in ein Bad aus dem Tränkmaterial eingetaucht und durchtränkt wird, und daß anschließend das überschüssige Tränkmaterial von der Umhüllungsflüssigkeit verdrängt und der durchtränkte Formkörper während er von der Umhüllungsflüssigkeit umschlossen ist, angeliert bzw. ausgehärtet wird, wonach die Umhüllungsflüssigkeit wieder entfernt wird.

11. Vorrichtung zur Durchführung des Verfahrens nach Anspruch 10, dadurch gekennzeichnet, daß in einem — gegebenenfalls unter Vakuum und/oder Druck setzbaren — Behälter (7) je eine Zu- und Abführleitung (8, 20) für das Tränkmaterial (3) sowie je eine Zu- und Abführleitung (14, 21) für die Umhüllungsflüssigkeit (16) angeordnet ist und daß im Inneren des Behälters (7) ein Gitter (19) od. dgl. zum Verhindern des Aufschwimmens der Formkörper (1') angeordnet ist (Fig. 4).

12. Vorrichtung zur Durchführung des Verfahrens nach Anspruch 10, dadurch gekennzeichnet, daß ein unter Vakuum und/oder Druck setzbarer Behälter (22) als ein um seine Längsachse wenigstens um 180° schwenkbares Gefäß ausgebildet ist, in dem die Umhüllungsflüssigkeit (16) verbleibt und wobei der Behälter (22) je eine Zu- und Abführleitung (8, 20) für das Tränkmaterial (3) aufweist (Fig. 5, 6).

13. Vorrichtung nach Anspruch 12, dadurch gekennzeichnet, daß im Inneren des Behälters (22) ein Gitter (17) od. dgl. zur Auflage der Formkörper (1') und zur Verhinderung des Aufschwimmens der Formkörper (1') angeordnet ist (Fig. 5, 6).

14. Vorrichtung zur Durchführung des Verfahrens nach Anspruch 8 oder 9, dadurch gekennzeichnet, daß mit an der Oberfläche der Verstärkungskörper (1) ausgesparten Zu- und Ablauföffnungen verbundene Anschlußstücke (2, 24, 25), z. B. Trichter oder Aufnahme-Zentrierplatten, vorgesehen sind, die von einer gemeinsamen Zuführ- und Abfuhrleitung (8, 20) für das Tränkmaterial (3) bzw. für Unter- und/oder Überdruck versorgt werden (Fig. 1, 2, 3).

## Claims

1. A process for the production of shaped bodies of reinforced plastic material in which a body formed of reinforcing material is impregnated with plastic material and allowed to jelly or set in a shell corresponding to at least the outer contours of the body, characterized in that the body consisting of the reinforcing material is brought into contact with, and enclosed by, prior to or after the impregnation with the plastic material for forming the shell, at least on its outside with the sheathing material forming the matrix and/or upper die which is in the liquid state and immiscible with the impregnating material and that the sheathing material is optionally allowed to solidify and is removed after the jelling or setting of the impregnating material.

2. A process according to claim 1, wherein the body consisting of reinforcing material is continously sheathed.

3. A process according to claim 1 or 2, wherein the body consisting of reinforcing material is sheathed by a lowmelting alloy, in particular eutectic metal alloys.

4. A process according to any one of the claims 1 to 3, wherein the body consisting of reinforcing material is formed on a basic body, for instance a preforming core, a winding mandrel or a dead core, characterized in that the body of reinforcing material is separated from the basic body prior to the impregnation or the sheathing.

5. A. process according to any one of the claims 1 to 3, wherein the body of reinforcing material is formed on a basic body, for instance a preforming core, a winding mandrel or a dead core, characterized in that the compound arrangement consisting of the basic body and the reinforcing material is drenched with the impregnating material and the body consisting of the reinforcing material is impregnated in the course of this operation.

6. A process according to claim 5, wherein the basic body employed consists of the same material as the sheathing material.

7. A process according to any one of the claims 1 to 6, wherein the impregnating operation is carried out at sub and/or super pressure conditions.

8. A process according to any one of the claims 1 to 7, wherein the body consisting of reinforcing material is sheathed with the sheathing material in the liquid state, whereupon — optionally after solidification of the sheathing material — the impregnation by means of the impregnating material is effected via recessed inlet and outlet openings.

9. A process according to claim 8, wherein the body consisting of reinforcing material is provided on its surface, under recessing of inlet and outlet openings, with a pore-closing coating prior to sheathing with the liquid sheathing material.

10. A process according to any one of the claims 1 to 7, wherein the body consisting of reinforcing material — optionally on the basic body — is immersed and impregnated after a preferably effected degassing operation in a bath of impregnating material and that subsequently, the excess impregnating material is expelled by the sheathing liquid and the impregnated shaped body is jellied or set while enclosed by the sheathing liquid, whereupon the sheathing liquid is removed.

11. A device for carrying out the process according to claim 10, wherein in a container (7) optionally subjectable to vacuum and/or pressure one each inlet and outlet line (8, 20) for the impregnating material (3) and one each inlet and outlet line (14, 21) for the sheathing liquid (16) is arranged and wherein a grid (19) or the like is provided within the container (7) to prevent the floating up of the shaped bodies (1') (Fig. 4).

12. A device for carrying out the process according to claim 10, wherein a container (22) subjectable to vacuum and/or pressure is formed as a vessel pivotable around its longitudinal axis by at least 180 degrees which retains the sheating liquid (16) and wherein the container (22) is provided with one each inlet and outlet opening (8, 20) for the impregnating material (3) (Fig. 5, 6).

13. A device according to claim 12, wherein a grid (17) or the like is provided within the container (22) for supporting the shaped bodies (1') and for preventing the floating up of the shaped bodies (1') (Fig. 5. 6).

14. A device for carrying out the process according to claim 8 or 9, wherein connecting pieces (2, 24, 25), for instance funnels or receiving centering plates, are connected to the inlet and outlet openings recessed in the surface of the reinforcing bodies (1), said pieces (2, 24, 25) being supplied by a common inlet and outlet line (8, 20) for the impregnating material (3) and for the sub and/or super pressure (Fig. 1, 2, 3).

## Revendications

1. Procédé de fabrication de corps moulés en matière synthétique renforcée, procédé dans lequel on imprègne, d'une matière synthétique, un corps formé d'une matière de renforcement, pour le laisser ensuite gélifier ou durcir dans une enveloppe dont au moins le contour extérieur épouse celui de ce ce corps, caractérisé en ce que, avant ou après son imprégnation par la matière synthétique, en vue de former l'enveloppe, le corps constitué de la matière de renforcement est mis en contact avec et entouré, du moins extérieurement, par la matière d'enrobage qui est à l'état liquide, qui est non miscible avec la matière d'imprégnation et qui forme la matrice et/ou le poinçon, tandis qu'on laisse ensuite éventuellement se solidifier cette matière d'enrobage pour l'enlever à nouveau après gélification ou durcissement de la matière d'imprégnation.

2. Procédé suivant la revendication 1, caractérisé en ce que le corps constitué de la matière de renforcement est entouré d'une enveloppe sans joint.

3. Procédé suivant la revendication 1 ou 2, caractérisé en ce que le corps constitué de la matière de renforcement est enveloppé d'un alliage à bas point de fusion, en particulier, d'un alliage métallique eutectique.

4. Procédé suivant une des revendications 1 à 3, dans lequel le corps constitué de la matière de renforcement est moulé sur un corps de base, par exemple, un noyau de préformage, un mandrin d'enroulement ou un noyau perdu, caractérisé en ce que, avant l'imprégnation ou l'enrobage, ce corps est séparé du corps de base.

5. Procédé suivant une des revendications 1 à 3, dans lequel le corps constitué de la matière de renforcement est moulé sur un corps de base, par exemple, un noyau de préformage, un mandrin d'enroulement ou un noyau perdu, caractérisé en ce qu'on coule le liquide d'imprégnation autour de l'assemblage composite constitué du corps de base et de la matière de renforcement, imprégnant ainsi le corps constitué de cette matière de renforcement.

6. Procédé suivant la revendication 5, caractérisé en ce que, comme corps de base, on utilise un corps constitué de la même matière que la matière d'enrobage.

7. Procédé suivant une des revendications 1 à 6, caractérisé en ce que l'imprégnation a lieu dans des conditions de dépression et/ou de surpression.

8. Procédé suivant une des revendications 1 à 7, caractérisé en ce que le corps constitué de la matière de renforcement est enveloppé de la matière d'enrobage à l'état liquide puis, éventuellement après solidification de cette matière, on procède à l'imprégnation avec la matière prévue à cet effet au moyen d'ouvertures d'admission et d'évacuation évidées.

9. Procédé suivant la revendication 8, caractérisé en ce que, déjà avant d'envelopper le corps constitué de la matière de renforcement avec la matière d'enrobage liquide, on applique un revêtement bouche-pore sur la surface de ce corps qui est située en dessous des évidements des ouvertures d'admission et d'évacuation.

10. Procédé suivant une des revendications 1 à 7, caractérisé en ce que, après un dégazage qu'il est préférable d'effectuer, le corps constitué de la matière de renforcement et éventuellement appliqué sur le corps de base est plongé et imprégné dans un bain de la matière d'imprégnation, après quoi l'excès de cette matière d'imprégnation est expulsé par le liquide d'enrobage et, pendant qu'il est enveloppé par ce dernier, le corps moulé imprégné est soumis à une gélification ou à un durcissement, le liquide d'enrobage étant ensuite à nouveau éliminé.

11. Dispositif pour la réalisation du procédé suivant la revendication 10, caractérisé en ce que, dans un récipient (7) pouvant éventuellement être mis sous vide et/ou sous pression, on prévoit chaque fois une conduite d'admission et d'évacuation (8, 20) pour la matière d'imprégnation (3), ainsi qu'une conduite d'alimentation et d'évacuation (14, 21) pour le liquide d'enrobage (16) et, à l'intérieur de ce récipient (7), on installe une grille (19) ou un élément analogue pour empêcher le corps moulé (1') de flotter (figure 4).

12. Dispositif pour la réalisation du procédé suivant la revendication 10, caractérisé en ce qu'un récipient (22) pouvant être mis sous vide et/ou sous pression est réalisé sous forme d'un récipient pouvant pivoter au moins de 180° sur son axe longitudinal et dans lequel séjourne le liquide d'enrobage (16), ce récipient (22) comportant chaque fois une conduite d'alimentation et d'évacuation (8, 20) pour la matière d'impregnation (3) (figures 5 et 6).

13. Dispositif suivant la revendication 12, caractérisé en ce que, à l'intérieur du récipient (22), on installe une grille (17) ou un élément analogue sur lequel vient prendre appui le corps moulé (1') qui est en même temps empêché de flotter (figures 5, 6).

14. Dispositif pour la réalisation du procédé suivant la revendication 8 ou 9, caractérisé en ce qu'on prévoit des éléments de raccordement (2, 24, 25), par exemple, des entonnoirs ou des plaques d'appui/centrage, ces éléments étant reliés aux ouvertures d'admission et d'évacuation formées par évidement sur la surface du corps de renforcement (1), tandis qu'ils sont alimentés par une conduite commune d'admission et d'évacuation (8, 20) pour la matière d'imprégnation (3) ou pour l'établissement de la dépression et/ou de la surpression (figures 1, 2 et 3).

*Fig.1*

*Fig.2*

*Fig.3*

Fig. 4

Fig.5

Fig.6